Europäisches Patentamt

European Patent Office

Office européen des brevets

(19)

(11) **EP 0 926 625 B1**

(12) **FASCICULE DE BREVET EUROPEEN**

(45) Date de publication et mention
de la délivrance du brevet:
**21.05.2003 Bulletin 2003/21**

(51) Int Cl.⁷: **G06T 5/00**

(21) Numéro de dépôt: **98204344.0**

(22) Date de dépôt: **18.12.1998**

(54) **Procédé de traitement d'image incluant des étapes de filtrage spatio-temporel du bruit et appareil d'imagerie médicale mettant en oeuvre ce procédé**

Bildverarbeitungsverfahren mit spatio-temporalen Rauschfilterschritten und Gerät zur durchführung des Verfahrens

Image processing method incuding spatio-temporal noise filtering steps and medical imaging apparatus applying this method

(84) Etats contractants désignés:
**DE FR GB NL**

(30) Priorité: **23.12.1997 FR 9716310**

(43) Date de publication de la demande:
**30.06.1999 Bulletin 1999/26**

(73) Titulaire: **Koninklijke Philips Electronics N.V.
5621 BA Eindhoven (NL)**

(72) Inventeurs:
• **Florent, Raoul
75008 Paris (FR)**
• **Soyer, Christel
75008 Paris (FR)**

(74) Mandataire: **Lottin, Claudine
Société Civile S.P.I.D.
156, Boulevard Haussmann
75008 Paris (FR)**

(56) Documents cités:
• **AUFRICHTIG R ET AL: "X-RAY FLUOROSCOPY SPATIO-TEMPORAL FILTERING WITH OBJECT DETECTION" IEEE TRANSACTIONS ON MEDICAL IMAGING, vol. 14, no. 4, 1 décembre 1995, pages 733-746, XP000548591**
• **BRAILEAN J C ET AL: "SIMULTANEOUS RECURSIVE DISPLACEMENT ESTIMATION AND RESTORATION OF NOISY-BLURRED IMAGE SEQUENCES" IEEE TRANSACTIONS ON IMAGE PROCESSING, vol. 4, no. 9, 1 septembre 1995, pages 1236-1251, XP000533956**

**Description**

L'invention concerne un procédé de traitement d'image pour réduire le bruit dans une image, incluant une détermination de trois intensités temporelles relatives à un pixel courant de même localisation dans trois images successives en séquence, où l'image à traiter est l'image centrale de la séquence, ce procédé incluant des étapes de filtrage spatio-temporel. L'invention concerne également un appareil médical mettant en oeuvre ce procédé.

Ce procédé est appliqué pour réduire le bruit dans une séquence d'images en préservant les fins objets en mouvement. Par fins objets, on entend des objets de 1 à quelques pixels par exemple 1 à 10 pixels. L'invention trouve particulièrement son application dans le traitement des images vidéo ou bien dans celui des images médicales.

Un procédé de traitement d'image pour réduire le bruit dans une séquence d'images incluant un filtrage spatio-temporel est déjà connu de la publication "Multistage Order Statistic Filters for Image Sequence Processing" par Gonzalo R. ARCE, and IEEE Transactions on SIGNAL PROCESSING, VOI.39, N°5 MAY 91.

Ce document décrit un procédé de filtrage MEDIAN à plusieurs niveaux appelé MOS qui combine les sorties de filtres spatiaux élémentaires opérant dans une structure de filtrage en cascade comprenant plusieurs niveaux. Ces filtres élémentaires sont conçus pour correspondre (MATCH) à la structure qui s'étend dans la fenêtre (WINDOW) du filtre. Dans un espace de signa! spatio-temporel, chaque filtre élémentaire est conçu pour préserver un motif (FEATURE) ayant des niveaux de gris substantiellement identiques dans une direction (DIMENSION) donnée. En incluant un nombre suffisant de filtres élémentaires, un motif orienté dans n'importe quelle direction peut être préservé par le filtre. Le type de motif qui doit être préservé détermine le type du filtre élémentaire du MOS. Si le motif est un segment unidirectionnel dans une espace à 3 dimensions spatio-temporelles (cube), le filtre MOS est appelé filtre multiniveaux unidirectionnel du fait que le filtre élémentaire est unidirectionnel. Si le motif a des segments s'étendant dans deux directions orthogonales l'une dans l'espace et l'autre dans le temps, le filtre élémentaire est bidirectionnel et le filtre MOS qui en résulte est appelé multiniveaux bidirectionnel. Dans une variante, une généralisation de la classe des filtres décrits plus haut est obtenue en fournissant un degré de contrôle du lissage par la variation du poids du centre dans la fenêtre du filtre.

D'après le document cité, ces filtres MOS sont conçus pour permettre la restauration des détails de l'ordre du pixel lorsque les images de la séquence sont exemptes de mouvements qui font qu'un objet s'est déplacé d'une image à l'autre. Les filtres MOS préservent la structure du signal dans tenir compte des mouvements de l'objet. La robustesse vis-à-vis du bruit dépend donc de l'amplitude des mouvements dans la séquence.

Un but de l'invention est de fournir un procédé de traitement d'image pour réduire le bruit dans une séquence d'images représentant des fins objets en mouvement, tout en écartant la formation de taches et de textures dues au bruit (PATCHES AND NOISE PATTERNS) qui résulte généralement d'un filtrage spatial de l'image courante dans une telle séquence d'images.

Un but de l'invention est aussi de fournir un procédé qui permet de s'affranchir du dilemme entre l'élimination des textures de bruit en ayant des problèmes de préservation des objets en mouvement, et la préservation des objets en mouvement en ayant des problèmes de rémanence de texture de bruit.

Ce but est atteint et ce problème est résolu au moyen d'un procédé de traitement d'image pour réduire le bruit dans une image selon la revendication 1.

Un avantage de ce procédé de filtrage est de pouvoir être appliqué dans des conditions où la séquence d'images contient des objets très fins soumis à des mouvements très importants. D'une manière générale, ce procédé de filtrage peut travailler dans des conditions particulièrement difficiles en ce qui concerne le mouvement des objets dans la séquence d'images. Par exemple, ce procédé de filtrage peut être utilisé dans un système de traitement d'image inclus dans un appareil d'imagerie médicale aux rayons X, travaillant en mode fluoroscopique où une séquence d'images comprend seulement 2 à 3 images par seconde, où les images sont extrêmement bruitées du fait des très faibles doses de rayons X utilisées pour leur formation, où les mouvements d'objets d'une image à l'autre dans la séquence sont très importants du fait du temps relativement long entre la formation de deux images successives et où en outre les objets en mouvement sont des outils comme des cathéters qui sont extrêmement fins. Ce procédé donne de très bons résultats même dans ces conditions extrêmement difficiles. Ainsi, ce procédé est capable d'extraire le bruit d'une séquence d'images de fluoroscopie dans les conditions très difficiles décrites plus haut ce manière telle que les images débruitées correspondent à des images qui auraient nécessité un temps d'exposition aux rayons X égal à 4 fois celui des images à traiter.

Un autre avantage du procédé est qu'il ne nécessite pas la connaissance A PRIORI d'une grandeur appelée écart type du bruit vis-à-vis de la moyenne du bruit (STANDARD DEVIATION), connaissance qui est nécessaire à la mise en oeuvre de nombreux procédés de réduction du bruit connus par ailleurs.

Un autre avantage du procédé est qu'il ne nécessite aucune condition initiale. Il peut être appliqué directement sur une séquence d'images.

Un appareil d'imagerie médicale, comprend des moyens pour mettre en oeuvre ce procédé selon la revendication 10.

L'invention est décrite ci-après en détail en référence aux figures schématiques annexées dont :

la FIG.1A qui représente, sous forme de blocs, les fonctions utilisées dans le procédé, et la FIG.1B qui illustre l'acquisition de trois images temporelles successives,

la FIG.2 qui représente la succession des étapes du procédé sous forme de blocs de manière plus détaillée que sur la FIG.1A,

les FIGs.3A et 3B qui illustrent respectivement les étapes de recherche et de détection de pixels fiables,

les FIGs.4A et 4B qui illustrent respectivement des situations où la séquence représente un fin objet en mouvement et un objet en forme de plateau en mouvement.

la FIG.5 qui illustre la détermination des pixels aléatoires.

la FIG.6 qui représente un appareil médical à rayons X avec des moyens de traitement d'images numérisées.

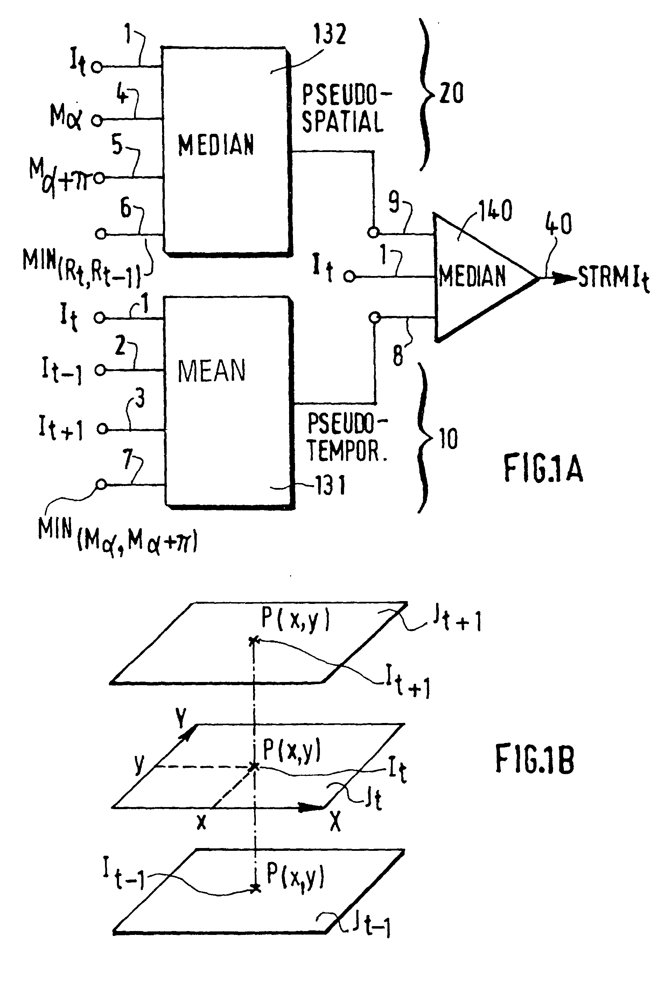

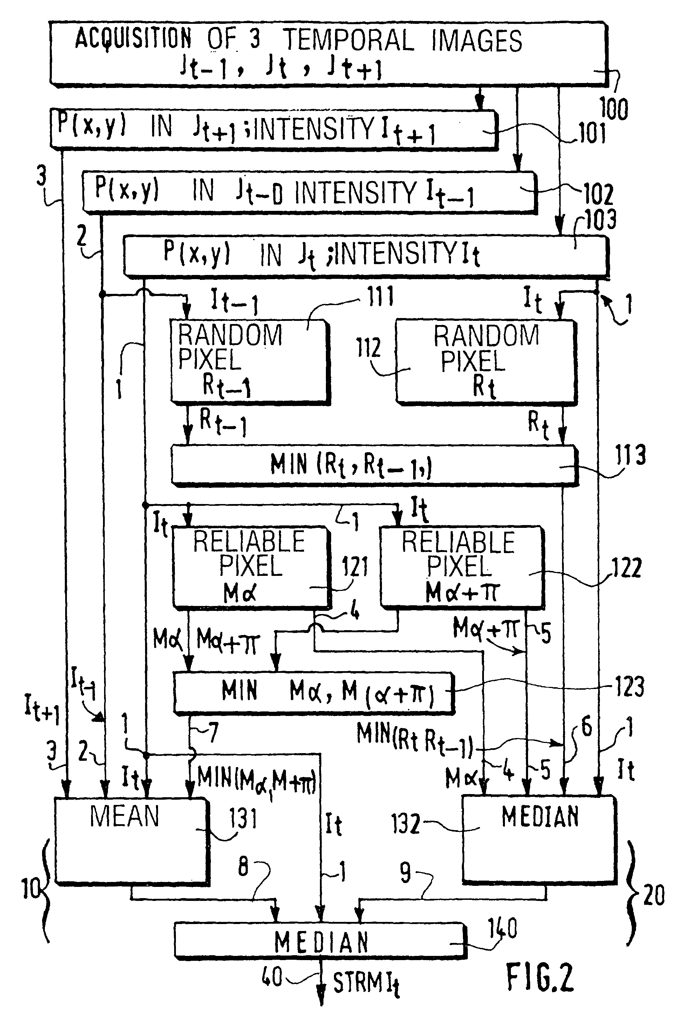

En référence à la FIG.1A, qui représente d'une manière simplifiée, sous forme d'une succession de blocs fonctionnels, un procédé de traitement d'images pour réduire le bruit dans une séquence d'images. et en référence à la FIG.2 qui représente ce même procédé de manière plus détaillée, ce procédé comprend :

1) une étape d'acquisition 100 de trois images successives notées $J_{t-1}$, $J_t$, $J_{t+1}$, toutes les trois bruitées d'origine, et non préalablement lissées des pics de bruit, car cela n'est pas nécessaire à ce procédé qui effectue par lui-même un filtrage complet du bruit. Les images acquises sont appelées respectivement images CAUSALE, DU PRESENT et ANTICAUSALE et illustrées par la FIG. 1B. L'image du présent $J_t$ est traitée par le présent procédé pour obtenir la réduction du bruit au moyen de ses propres données d'intensité et au moyen des données d'intensité des images causale $J_{t-1}$ et anticausale $J_{t+1}$. Pour le traitement, on considère dans toutes ces images un pixel P(x,y) de coordonnées spatiales x,y dans un repère X.Y des images, et d'intensités $I_{t-1}(x,y)$, $I_t(x,y)$ et $I_{t+1}(x,y)$ respectivement dans les images causale, du présent et anticausale. Pour la simplicité d'écriture ces intensités sont notées ci-après $I_{t-1}$, $I_t$ et $I_{t-1}$.

En référence à la FIG.1A qui montre les fonctions de base utilisées, le procédé repose sur trois principes importants.

Selon le premier principe, le procédé se déroule en suivant deux branches principales :

une première branche 10 de filtrage substantiellement temporel appelée branche pseudo-temporelle ;
une deuxième branche 20 de filtrage substantiellement spatial, appelée branche pseudo-spatiale.

Selon ce premier principe, aucune de ces branches 10 ou 20 ne fournit un filtrage purement temporel ou purement spatial. Chaque branche 10 ou 20 fournit un débruitage équilibré de l'image centrale $J_t$ de la séquence des trois images successives. Le procédé de filtrage comprenant ces deux branches 10 et 20 établit un transfert continu, selon que la séquence d'images comprend un objet en mouvement ou un objet dont le mouvement a disparu, entre la branche pseudo-spatiale et la branche pseudo-temporelle.

Selon le second principe, le procédé comprend des opérations pour éviter les taches ou textures de bruit (PATCHES, NOISE PATTERNS) qui apparaîtraient comme résultat d'un filtrage purement spatial.

En référence à la FIG.2, selon ce second principe, ces opérations utilisent un mécanisme de sélection aléatoire de pixels 111, 112, 113 dans les images de la séquence, et ce mécanisme de sélection aléatoire n'est pas purement spatial. En effet, un tel mécanisme aléatoire, s'il était purement spatial, ou bien il laisserait subsister des textures de bruit, ou bien, s'il éliminait les textures de bruit, alors il ne permettrait pas d'atteindre un niveau de débruitage satisfaisant. Occasionnellement, si un tel mécanisme arrivait à éliminer les textures de bruit en atteignant un niveau de débruitage satisfaisant, il laisserait encore subsister des traînées de bruit correspondant aux fronts d'intensité dus aux mouvements entre deux images.

Selon le troisième principe, le procédé s'appuie sur deux sortes de pixels distingués dans les images de la séquence : d'une part sur des pixels appelés PIXELS FIABLES (RELIABLE PIXELS) qui sont à courte distance du pixel courant P(x,y) traité et dans l'image du PRESENT $J_t$, fournis par les opérations 121, 122, 123, et d'autre part sur des pixels qui ne sont pas nécessairement des PIXELS FIABLES, et qui se trouvent dans les images CAUSALE et ANTICAUSALE, ou encore qui se trouvent dans l'image du PRESENT mais à plus longue distance du pixel courant P(x,y) que les piels fiables, et qui sont fournis par les opérations 111, 112, 113.

En référence aux FIGs.1A et 2, pour se dérouler selon ces principes importants, le procédé comprend donc des étapes de :

2) Filtrage en deux opérations parallèles 10, 20 qui sont :

la première branche pseudo-temporelle 10,
la seconde branche pseudo-spatiale 20,
ces deux opérations étant suivies d'un filtre MEDIAN 140 qui reçoit en entrées, les deux sorties 8, 9 issues des branches 10 et 20, et l'intensité 1 du pixel courant $I_t$.

La branche pseudo-temporelle 10 a d'une part trois entrées temporelles 1, 2, 3 qui sont les intensités $I_{t-1}$, $I_t$, $I_{t-1}$ prélevées dans les trois images successives $J_{t-1}$, $J_t$, $J_{t-1}$. Cette branche pseudo-temporelle 10 a d'autre part une entrée spatiale 7 évaluée à partir de PIXELS fiables.

Ces pixels fiables sont détectées par des opérations 121, 122, 123, qui se déroulent en posant comme hypothèse que l'on veut détecter des petits objets fins, ou des fins détails, donc des courts segments.

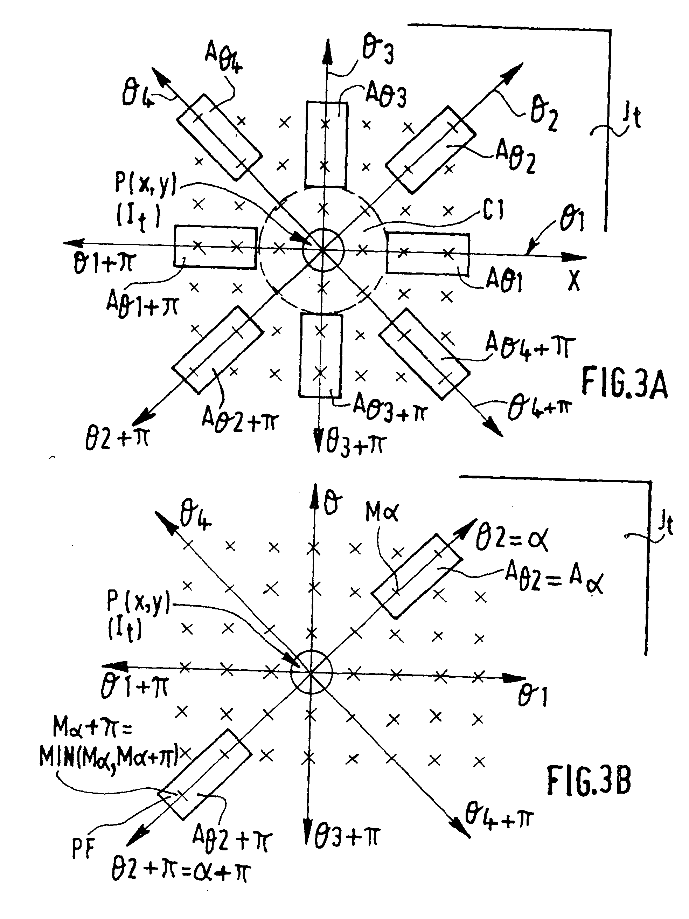

En référence à la FIG.3A, dans cette opération, on analyse un certain nombre de directions appelées $\ominus$ en utilisant des filtres à supports linéaires dans lesquels on réalise une moyenne notée A (AVERAGE) des intensités des pixels sur ces supports. On définit un système d'axes centré ayant des directions repérées par des angles discrétisés $\ominus$ mesurés vis-à-vis d'un axe de référence, par exemple l'axe X des abscisses x. L'angle $\ominus$ discrétisé prend différentes valeurs régulièrement réparties dans l'espace, telles que $\ominus_1 = 0$, $\ominus_2 = \pi/4$, $\ominus_3 = \pi/2$, $\ominus_4 = 3\pi/4$. Les axes situés dans des directions diamétralement opposées sont repérés par les mêmes notations d'angles $+ \pi$ tels que : $\ominus_1 + \pi$, $\ominus_2 + \pi$, $\ominus_3 + \pi$, $\ominus_4 + \pi$. Dans ce système d'axes que l'on centre sur le pixel courant $P(x,y)$, on place les supports des filtres linéaires selon les différentes directions discrétisées notées $\ominus$ ou $\ominus+\pi$.

Pour la détection de fins détails, on choisit de préférence des étendues de support, ou masques, de 2 pixels de long. En effet, plus le support est grand, moins existe la possibilité de détection de très fins détails. Si on augmente l'étendue des supports ou masques, en prenant par exemple 3 ou 4 pixels alignés, il faut alors augmenter le nombre des directions du système d'axes, ce qui améliore le débruitage mais risque de casser les détails et augmente le coût des calculs. En référence à la FIG. 3A, les masques sont disposés un peu éloignés du pixel central ce qui permet de lutter contre la corrélation spatiale du bruit et donc d'obtenir un meilleur débruitage. Par exemple on laisse une couronne de 1 pixel.

Donc, la distance courte pour la détection des pixels fiables est 2 ou 3 pixels vis-à-vis du pixel central.

On effectue l'opération ce détection des pixels FIABLES sur l'image $J_t$ du PRESENT. Cette opération comprend une sélection d'une direction particulière repérée par une valeur d'angle a parmi les différents angles $\ominus$ et $\ominus+\pi$ du système d'axes. Cette direction particulière est sélectionnée de telle manière que le niveau d'intensité moyen qui est calculé sur l'étendue (MASK) du support de filtre linéaire placé dans cette direction a soit le plus proche possible du niveau d'intensité $I_t$ du pixel courant $P(x,y)$.

A cet effet, on évalue la moyenne d'intensité notée $A_\ominus$ dans toutes les étendues (MASKS) des supports de filtres situées dans toutes les directions $\ominus$ du système d'axes. On définit ensuite la direction particulière qui correspond à un angle $\ominus$ pour lequel l'expression écrite ci-après est minimale lorsque $\ominus$ varie :

$$\left| [(A_\ominus + A_{\ominus+\pi})/2] - I_t \right| \qquad (1)$$

et on appelle a l'angle particulier $\ominus$ correspondant. Les valeurs particulières des moyennes $A_\ominus$ et $A_{\ominus+\pi}$, effectuées dans les supports de filtres linéaires, et qui minimisent l'expression (1) ci-dessus, sont notées moyenne $A_\alpha$ et moyenne $A_{\alpha+\pi}$.

En référence à la FIG.3B, ayant ainsi déterminé une direction $\alpha$, on sélectionne par des opérations 121 et 122 deux pixels FIABLES à raison d'un pixel dans chacun des supports correspondant à ces moyennes. Le premier pixel fiable choisi par l'opération 121 est celui qui a l'intensité minimale notée $M_\alpha$ dans le support de filtre situé dans la direction $\alpha$, et le second pixel fiable choisi par l'opération 122 est celui qui a l'intensité minimale notée $M_{\alpha+\pi}$ dans le support de filtre situé dans la direction opposée $\alpha+\pi$.

Le procédé comprend encore une sélection supplémentaire par une opération 123 qui détermine, parmi ces deux pixels fiables préalablement sélectionnés, celui dont l'intensité est minimale, et on note cette intensité minimale $MIN(M_\alpha, M_{\alpha+\pi})$.

Le choix des pixels FIABLES parmi les pixels d'intensité minimale est justifié par le fait que dans la plupart des applications du présent procédé, les objets sont représentés en sombre sur fond clair. Tel est le cas des applications en imagerie médicale, radiographie, fluoroscopie etc. Dans ces applications, on cherche la préservation d'objets fins qui sont toujours sombres. Il s'ensuit qu'un pixel FIABLE est foncé. S'il se trouve que l'image à traiter représente des objets clairs sur fond sombre, on détermine alors les pixels fiables parmi les pixels d'intensité maximale. Dans les applications en télévision, il n'est évidemment pas nécessaire de rechercher les pixels ou points FIABLES parmi les plus sombres. On cherche alors simplement les pixels ou points d'intensité les plus proches du pixel ou point courant.

En référence aux FIGs.1A et 2, la branche pseudo-temporelle 10 comprend un opérateur de MOYENNE (MEAN) 131 qui combine en entrées les trois intensités temporelles $I_{t-1}$, $I_t$, $I_{t-1}$ référencées 1, 2, 3, et l'intensité spatiale $MIN(M_\alpha, M_{\alpha+\pi})$ référencée 7.

On analyse cette opération de la façon suivante :

En référence à la FIG.4A qui représente le mouvement d'un fin objet OBJ présent dans les images entre $J_{t-1}$ et $J_{t-1}$, s'il n'y a pas de mouvement de l'objet OBJ entre les trois images successives $J_{t-1}$, $J_t$, $J_{t+1}$, d'une part les trois entrées temporelles 1, 2, 3 constituées par les intensités $I_{t-1}$, $I_t$, $I_{t+1}$ sont dites "correctes" parce qu'elles ont toutes trois pratiquement la même valeur et que cette valeur est substantiellement celle du pixel courant $I_t$. D'autre part, l'entrée 7 constituée par l'intensité spatiale $MIN(M_\alpha, M_{\alpha+\pi})$ du pixel FIABLE est toujours "correcte" selon le principe de sélection du pixel FIABLE. Les pixels FIABLES détectés précédemment ont été décrétés FIABLES parce qu'ils sont situés dans une direction $\alpha$ où l'intensité est compatible avec l'intensité $I_t$ du pixel courant à traiter.

En résumé, la branche pseudo-temporelle 10 traite trois pixels d'origine temporelle issus des images temporelles $J_{t-1}$, $J_t$, $J_{t+1}$ et un pixel appelé FIABLE issu d'une détection purement spatiale 121, 122, 123. La branche pseudo-temporelle 10 fournit donc, en l'absence de mouvement, un bon débruitage et une bonne intégration temporelle.

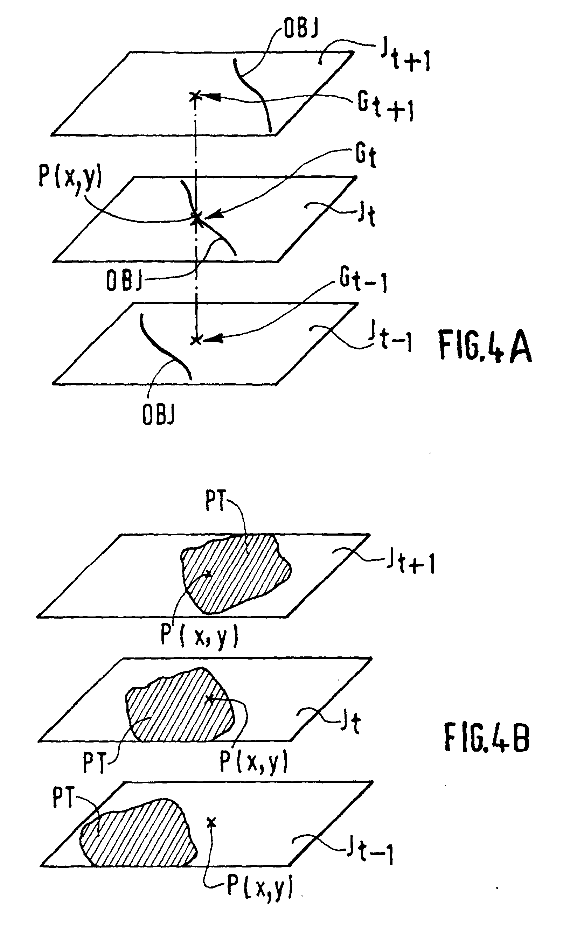

En référence à la FIG.4B, s'il y a un mouvement de l'objet OBJ entre les trois images successives $J_{t-1}$, $J_t$, $J_{t-1}$ et s'il s'agit d'un "mouvement de plateau" (PLATEAU MOTION) alors soit l'intensité $I_{t-1}$, soit l'intensité $I_{t-1}$, est franchement différente de l'intensité $I_t$ du pixel courant. On dit que l'entrée temporelle correspondante 2 ou 3 de la branche pseudo-temporelle est "FAUSSE". Les trois autres entrées sont "CORRECTES" et le résultat de l'opérateur de MOYENNE présente une petite distorsion provoquée par le fait que seulement 75 % des entrées sont valides.

En référence à la FIG.4A, s'il y a un mouvement de l'objet OBJ entre les trois images successives $J_{t-1}$, $J_t$, $J_{t-1}$ et s'il s'agit d'un mouvement furtif d'un objet fin (PASSING-BY-MOVEMENT), alors il peut se produire que : à la fois l'intensité $I_{t-1}$ et l'intensité $I_{t-1}$ sont franchement différentes de l'intensité I. du pixel courant. Les deux entrées temporelles 2 et 3 correspondantes de la branche pseudo-temporelle 10 sont "FAUSSES". Seulement deux entrées 1 et 7 de cette branche 10 sont "CORRECTES". Il s'ensuit que le résultat de l'opérateur de MOYENNE 131 n'est pas fiable dans ce cas puisque 50 % seulement des entrées sont valides.

La branche pseudo-spatiale 20 vient corriger ces défauts.

En référence aux FIGs.1A et 2, la branche pseudo-spatiale 20 a d'abord trois entrées spatiales fiables 1, 4, et 5 qui sont l'intensité $I_t$ du pixel courant, l'intensité $M_\alpha$ du pixel FIABLE dans la direction $\alpha$ et l'intensité $M_{\alpha+\pi}$ du pixel FIABLE dans la direction opposée $\alpha+\pi$.

Mais l'homme du métier sait qu'un filtre purement spatial est susceptible de fournir des taches et textures de bruit (PATCHES, NOISE PATTERNS). C'est pourquoi, selon le présent procédé, on s'affranchit de ce risque en fournissant une quatrième entrée 6 non purement spatiale à la branche pseudo-spatiale.

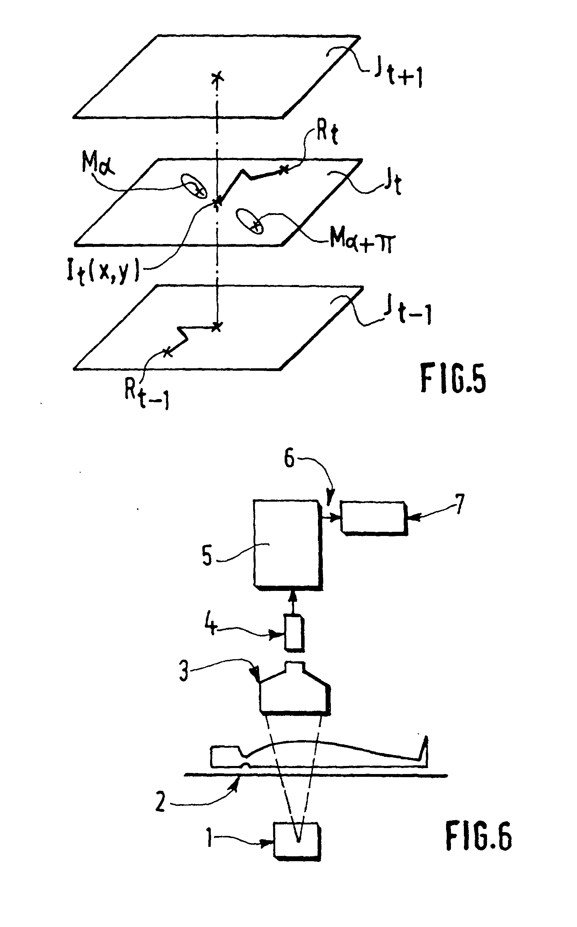

En référence à la FIG.5, la construction de cette entrée 6 est basée sur un mécanisme de sélection aléatoire et a aussi un caractère récursif. On note $R_t$ cette quatrième entrée 6 qui est l'intensité d'un pixel choisi de manière aléatoire autour du pixel courant $P(x,y)$ dans l'image $J_t$ du PRESENT. Par "autour du pixel courant" on entend que $R_t$ est l'intensité d'un pixel choisi dans un voisinage $V_t$ autour du pixel courant. Le voisinage peut être carré de dimension $\pm 6$ ou $\pm 8$ pixels de part et d'autre du pixel courant, ce pixel courant étant exclu du voisinage $V_t$. Du fait de l'étendue du voisinage choisi, le pixel aléatoire va se trouver à plus longue distance du pixel central que ne le sont les pixels fiables. D'une manière générale, l'intensité $R_t$ est celle d'un pixel aléatoire, dans le voisinage $V_t$, mais pas celle d'un pixel FIABLE.

On introduit pour cette raison une notion temporelle appliquée sur $R_t$, ainsi qu'une notion de récursivité.

Selon le présent procédé, déjà une valeur $R_{t-1}$ a été évaluée en relation avec l'image CAUSALE $J_{t-1}$. En référence à la FIG.2, on retient donc à l'arrivée de l'image $J_t$, par des opérations 111 et 112 respectivement, des valeurs aléatoires $R_{t-1}$ et $R_t$ selon le principe décrit plus haut. Et on sélectionne comme quatrième entrée 6 de la branche pseudo-spatiale 20, dans une opération 113, l'intensité 6 notée

$$MIN \; |R_{t-1}, R_t| \qquad (2)$$

Si l'image comprend des objets clairs sur fond sombre, un MAX remplace le MIN de la formule (2).

Le choix d'un pixel aléatoire et d'origine temporelle pour fournir la quatrième entrée 6 de la branche pseudo-spatiale 20 est justifié par le fait que le défaut de la branche pseudo-temporelle 10 se produit dans le cas d'un mouvement furtif d'un objet fin OBJ. Ce défaut ne peut être compensé par l'utilisation d'une entrée formée de l'intensité d'un pixel proche du pixel central puisque l'on sait qu'un tel pixel a, dans l'image du présent en cours de traitement par la branche pseudo-spatiale, une intensité très différente. Ce défaut ne peut être compensé que par l'intensité d'un pixel localisé loin du pixel courant, néanmoins dans la limite d'un voisinage moyennement grand, et occasionnellement dans une image autre que celle du PRESENT, c'est-à-dire dans l'image ANTICAUSALE, où on a une probabilité plus grande de retrouver le fin objet mobile OBJ.

Les quatre entrées 1, 4, 5 et 6 de la branche pseudo-spatiale 20 sont donc constituées de trois intensités spatiales $I_t$, $M_\alpha$, $M_{\alpha+\pi}$ de PIXELS FIABLES et d'une intensité MIN($R_{t-1}$, $R_t$) d'un pixel de localisation aléatoire à caractère temporel et récursif. Ces quatre valeurs d'intensité, dont trois sont toujours CORRECTES, sont appliquées aux entrées d'un MEDIAN 132 à quatre entrées. Par l'opération du MEDIAN 132, les quatre intensités présentes sont classées par ordre de valeur et les deux intensités de valeurs intermédiaires sont moyennées. Le MEDIAN 132 fournit en sortie 9 la valeur d'intensité qui est située entre ceux autres intensités restantes. Le MEDIAN 132 a la propriété d'éliminer les valeurs atypiques et de fournir comme résultat la valeur MEDIANE, c'est-à-dire qu'une entrée FAUSSE parmi les trois entrées appliquées au MEDIAN est automatiquement éliminée et ne peut participer au résultat. Donc le résultat du MEDIAN de la branche pseudo-spatiale 20 est 100 % CORRECT. En supposant que le résultat ne soit pas le plus correct possible, mais un peu éloigné de l'intensité la meilleure, il participe néanmoins à l'élimination des taches et textures de bruit dans l'image.

3) Opération de combinaison par un MEDIAN 140 de sortie.

En référence aux FIGs. 1A et 2, les sorties 8 et 9 de la branche pseudo-temporelle 10, de la branche pseudo-spatiale 20, et l'intensité $I_t$ référencée 1 du pixel courant dans l'image du PRESENT $J_t$ sont portées aux trois entrées d'un MEDIAN 140 appelé MEDIAN de sortie.

Parmi ces trois entrées 1, 8 et 9, il y a toujours deux entrées CORRECTES qui sont :

l'entrée 1 qui est l'intensité $I_t$ du pixel courant,
l'entrée 9 qui est la sortie de la branche pseudo-spatiale 20.

Il en résulte que la sortie 40, notée STRMI$_t$ de ce MEDIAN 140 de sortie est toujours 100 % CORRECTE du fait des propriétés des MEDIANS.

Le présent procédé est mené à bien de manière automatique par un balayage standard et systématique de l'image d'origine bruitée où chaque pixel est soumis au passage à toutes les étapes du procédé. Par exemple, l'image peut être balayée de gauche à droite et de bas en haut comme connu de l'homme du métier. Chaque pixel en cours de traitement est le pixel appelé pixel courant.

Le présent procédé comprend essentiellement une détermination de trois intensités temporelles relatives à un pixel courant de même localisation dans trois images successives en séquence, où l'image à traiter est l'image centrale de la séquence, et inclut des étapes de filtrage pour fournir au pixel courant de l'image traitée ($J_t$) une intensité filtrée (40) avec des moyens de traitement (10,20) spatio-temporels combinant des entrées (1, 2, 3) d'intensités à caractère temporel, des entrées (4, 5, 7) d'intensités à caractère spatial, et au. moins une entrée (6) d'intensité à caractère spatio-temporel et aléatoire.

Donc le présent procédé comprend d'une manière générale une branche de traitement pseudo-spatiale 20 en parallèle à une branche de traitement pseudo-temporelle 10 et est doté de moyens de combinaison 140 des résultats 8 et 9 de ces branches.

La branche pseudo-temporelle 10 a des moyens de combinaison 131 d'une part d'une majorité d'entrées 1,2,3, qui sont des intensités sélectionnées sur l'axe temporel t-1, t, t+1 considéré au pixel courant de coordonnées x,y, et d'une minorité d'entrées 7, qui sont des intensités de pixels FIABLES fournis par des moyens de sélection 121, 122, 123 de pixels FIABLES dans l'image du PRESENT.

La branche pseudo-spatiale 20 a des moyens de combinaison 132 d'une majorité d'entrées 1, 4, 5, qui sont des intensités de pixels FIABLES fournis par des moyens de sélection de pixels FIABLES dans l'image du PRESENT, et d'une minorité d'entrées 6, qui sont des intensités de pixels obtenus par un mécanisme 111, 112, 113 de sélection aléatoire à caractère temporel et récursif.

Les moyens de sélection des pixels FIABLES ont été décrits plus haut à titre tout à fait indicatif. Beaucoup d'autres moyens de sélection de pixels ou points FIABLES font partie des connaissances générales de l'homme du métier. Des pixels fiables peuvent être par exemple sélectionnés en appliquant un seuil sur les niveaux d'intensité des pixels dans un voisinage du pixel courant dans l'image du PRESENT et en décrétant pixels fiables ceux dont l'intensité est la plus proche de celle du pixel courant dans la limite du seuil.

Ainsi la sélection des pixels FIABLES peut être effectuée par la sélection de pixels à courte distance, dans un masque ou un voisinage, qui semblent le plus appartenir au même objet par un critère de vraisemblance donné, par exemple basé sur la proximité des niveaux d'intensité.

Le présent procédé peut être mis en oeuvre par un système simple. Un tel système comprend seulement les moyens de sélection des pixels FIABLES et des pixels ALEATOIRES à caractère récursif, et trois moyens de combinaison, de préférence un MEDIAN-4 dans la branche pseudo-spatiale, un OPERATEUR DE MOYENNE A 4 ENTREES dans la branche pseudo-temporelle et un MEDIAN de combinaison des sorties des branches pseudo-spatiale et pseudo-temporelle.

La combinaison spatiale peut être effectuée au lieu d'utiliser un MEDIAN par un opérateur de MOYENNE, un opérateur de combinaison linéaire etc...

A titre d'exemple, en référence à la FIG.6, un appareil d'imagerie médicale comprend un système de radiographie numérisée ayant des moyens pour mettre en oeuvre la méthode de réduction du bruit décrite plus haut. Cet appareil comprend une source 1 de rayons X, une table 2 pour recevoir le patient, un dispositif récepteur des rayons X ayant traversé le patient, et en particulier un dispositif intensification d'image 3 couplé à un tube vidéo 4 qui fournit des données à un système 5 de traitement d'image comprenant un microprocesseur. Ce dernier comprend plusieurs sorties dont une sortie 6 couplée à un moniteur 7 pour la visualisation des images traitées ou à traiter, ou bien de séquences d'images.

L'image radiographique numérisée peut contenir 512 x 512 ou 1024 x 1024 pixels codés sur 8 bits ou 10 bits. Chaque pixel peut être ainsi affecté d'un parmi 256 ou 1024 niveaux d'intensité. Par exemple, les régions sombres ont un niveau d'intensité faible, et les régions claires de l'image ont un niveau d'intensité élevé.

L'image numérisée peut être obtenue en mode fluoroscopique. L'invention peut trouver son application particulièrement dans le traitement d'images artériographiques.

Le traitement de l'image numérique selon le procédé décrit plus haut est mis en oeuvre dans ses différentes étapes et opérations dans le système 5. Les données peuvent être stockées dans une zone mémoire non représentée. Des moyens d'enregistrement non représentés peuvent être en outre utilisés.

**Revendications**

1. Procédé de traitement d'image pour réduire le bruit dans une image incluant une détermination de trois intensités temporelles relatives à un pixel courant de même localisation dans trois images successives en séquence, où l'image à traiter est l'image centrale de la séquence, ce procédé incluant des étapes de filtrage spatio-temporel comprenant :

des moyens de traitement (10,20) spatio-temporels combinant des entrées (1, 2, 3 ) d'intensités à caractère temporel, des entrées (4, 5, 7) d'intensités à caractère spatial, et au moins une entrée (6) d'intensité à caractère spatio-temporel et aléatoire, pour fournir l'intensité filtrée (40) au pixel courant de l'image traitée ($J_t$).

2. Procédé de traitement selon la revendication 1, comprenant :

une première branche de traitement (10) appelée pseudo-temporelle combinant une majorité d'entrées (1, 2, 3) d'intensités à caractère temporel avec une minorité d'entrées (7) d'intensités à caractère spatial.

une deuxième branche de traitement (20) appelée pseudo-spatiale, en parallèle sur la première branche, et combinant une majorité d'entrées (1,4,5) d'intensités à caractère spatial avec une minorité d'entrées (6) d'intensité à caractère spatio-temporel et aléatoire,

et des moyens de combinaison (140) des résultats (8,9) des deux branches parallèles fournissant l'intensité filtrée (40) pour le pixel courant de l'image traitée ($J_t$).

3. Procédé selon la revendication 2, dans lequel :

dans la branche pseudo-temporelle (10), la majorité d'entrées (1,2,3) sont des intensités ($I_{t-1}$, $I_t$, $I_{t-1}$) sélectionnées sur l'axe temporel (t-1, t, t+1) de la séquence, considérée au pixel courant, et la minorité d'entrées (7) sont des intensités [MIN($M_\alpha$, $M_{\alpha-\pi}$)] substantiellement proches de celle du pixel courant, appelées FIABLES, sélectionnées spatialement dans l'image à traiter ($J_t$),

et dans la branche pseudo-spatiale (20), la majorité d'entrées (1,4,5) sont des intensités ($I_t$, $M_\alpha$, $M_{\alpha+\pi}$) substantiellement proches de celle du pixel courant appelées FIABLES sélectionnées spatialement dans l'image à traiter ($J_t$), et la minorité d'entrées (6) sont des intensités de pixels sélectionnées dans l'image précédant l'image à traiter et dans l'image à traiter ($J_{t-1}$, $J_t$) par un mécanisme à caractère aléatoire et récursif.

4. Procédé selon la revendication 3, dans lequel la branche pseudo-temporelle (10) effectue la combinaison de ses entrées (1,2,3,7) avec un opérateur de MOYENNE (131), la branche pseudo-spatiale (20) effectue la combinaison de ses entrées (1,4,5,6) avec un filtre MEDIAN (132), et la combinaison des sorties (8,9) des deux branches est effectuée avec un filtre MEDIAN (140) fournissant en sa sortie (40) l'intensité filtrée (STRMI) à attribuer au pixel courant P(x,y).

5. Procédé selon l'une des revendications 3 ou 4, dans lequel :

dans le cas où les objets sont représentés dans les images en sombre sur fond clair, dans la branche pseudo-spatiale (20), le mécanisme (111, 112, 113) à caractère aléatoire et récursif comprend, pour effectuer la sélection temporelle des intensités minoritaires (6) :
une détermination d'un voisinage ($V_t$) autour du

pixel courant dans l'image à traiter ($J_t$) excluant le pixel courant [P(x,y)], en prenant en compte qu'un voisinage a déjà été déterminé dans l'image précédente ($J_{t-1}$), lors du traitement de ladite image précédente,

une détermination (111, 112) d'un pixel aléatoire dans le voisinage de l'image temporelle à traiter, en prenant en compte qu'un pixel aléatoire a déjà été déterminé dans l'image précédente ($J_{t-1}$), lors du traitement de ladite image précédente,

et une détermination des intensités ($R_{t-1}$, $R_t$) qui correspondent aux deux pixels aléatoires prélevé dans l'image précédente et dans l'image à traiter,

une sélection (113), parmi ces deux intensités, de l'intensité la plus faible [MIN($R_{t-1}$, $R_t$)] des deux pixels aléatoires,

ou, dans le cas où les objets sont représentés en clair sur fond sombre, le mécanisme comprend le déroulement des mêmes opérations en sélectionnant les intensités les plus grandes au lieu des plus faibles.

**6.** Procédé selon la revendication 5, dans lequel, dans le cas où les objets sont représentés dans les images en sombre sur fond clair, dans la branche pseudo-temporelle (10), la sélection spatiale des intensités minoritaires FIABLES (5,7) dans l'image à traiter ($J$;) comprend :

une définition de supports de filtres linéaires disposés selon des axes répartis de manière discrétisée, et centré sur le pixel courant,

une détermination (121, 122), dans deux supports de filtre diamétralement opposés, de deux pixels appelés pixels FIABLES, respectivement un pixel par support, ayant les intensités les plus faibles ($M_\alpha$, $M_{\alpha-\pi}$),

une détermination (123), entre ces deux intensités ($M_\alpha$, $M_{\alpha+\Pi}$) de l'intensité qui est la plus faible [MIN($M_\alpha$, $M_{\alpha-\pi}$)],

et la sélection de cette dernière intensité comme entrée spatiale (7) de la branche pseudo-temporelle,

ou dans le cas où les objets sont représentés en clair sur fond sombre, un déroulement des mêmes opérations en sélectionnant les intensités les plus grandes au lieu des plus faibles.

**7.** Procédé selon la revendication 6, dans lequel les pixels aléatoires sont sélectionnés à plus grande distance spatiale du pixel courant que les pixels fiables.

**8.** Procédé selon la revendication 7, dans lequel les supports des filtres linéaires sont de deux pixels, séparés du pixel courant par une couronne de 1 pixel, et les axes sont répartis de manière discrétisée en faisant entre eux des angles de $\pi/4$, et les voisinages ($V_t$) sont de $\pm$ 6 pixels à $\pm$ 8 pixels.

**9.** Procédé selon l'une des revendications précédentes, dans lequel les images sont balayées automatiquement de façon standard, pixel après pixel, et dans lequel les étapes sont mises en oeuvre automatiquement pour chaque pixel.

**10.** Appareil d'imagerie médicale, comprenant un système d'acquisition d'une séquence d'images numériques, et un système de traitement d'images qui a accès aux données d'image du système d'acquisition et à un système d'affichage et qui comprend un processeur pour mettre en oeuvre un procédé selon l'une des revendications 1 à 9.

## Patentansprüche

**1.** Bildverarbeitungsverfahren zur Unterdrückung des Rauschens in einem Bild einschließlich der Bestimmung von drei zeitlichen Intensitäten in Bezug auf ein laufendes Pixel selber Lokalisierung in drei sequenziell aufeinanderfolgenden Bildern, wobei das zu verarbeitende Bild das Zentralbild ist und das Verfahren spatio-temporale Rauschfilterschritte einschließt, bestehend aus:

spatio-temporalen Verarbeitungsverfahren (10, 20), um die Eingänge (1, 2, 3) mit Intensitäten zeitlicher Art mit den Eingängen (4, 5, 7) mit Intensitäten räumlicher Art zu kombinieren, und mindestens einen Eingang (6) mit einer spatio-temporalen und aleatorischen Intensität, um dem laufenden Pixel des verarbeiteten Bildes ($J_t$) die gefilterte Intensität (40) zu liefern.

**2.** Verarbeitungsverfahren nach Anspruch 1, bestehend aus:

einem ersten Verarbeitungszweig (10), benannt pseudo-temporal, der eine Mehrheit von Eingängen (1, 2, 3) mit Intensitäten zeitlicher Art mit einer Minderheit von Eingängen (7) mit Intensitäten räumlicher Art kombiniert,

einem zweiten Verarbeitungszeig (20), benannt pseudo-spatial, parallel zum ersten Zweig, der eine Mehrheit von Eingängen (1, 4, 5) mit Intensitäten räumlicher Art mit einer Minderheit von Eingängen (6) mit Intensitäten spatio-temporaler und aleatorischer Art kombiniert,

und Verfahren zur Kombination (140) der Ergebnisse (8, 9) der beiden parallelen Zweige, die die gefilterte Intensität (40) für das laufende Pixel des ver-

arbeiteten Bildes ($J_t$) liefern.

3. Verfahren nach Anspruch 2, in dem:

im pseudo-temporalen Zweig (10) die Mehrheit der Eingänge (1, 2, 3) Intensitäten ($I_{t-1}$, $I_t$, $I_{t+1}$) sind, die auf der zeitlichen Achse (t-1, t, t+1) der Sequenz hinsichtlich des laufenden Pixels gewählt wurden, und die Minderheit der Eingänge (7) Intensitäten [MIN($M_\alpha$, $M_{\alpha+\pi}$)] sind, die grundlegend nahe an denen des laufenden Pixels liegen, ZUVERLÄSSIG benannt und spatial im zu verarbeitenden Bild ($J_t$) ausgewählt,
und im pseudo-spatialen Zweig (20) die Mehrheit der Eingänge (1, 4, 5) Intensitäten ($I_t$, $M_\alpha$, $M_{\alpha+\pi}$) sind, die grundlegend nahe an der des laufenden Pixels liegen, ZUVERLÄSSIG benannt und räumlich im zu verarbeitenden Bild ($J_t$) ausgewählt, und die Minderheit der Eingänge (6) Intensitäten von Pixeln sind, die in dem dem zu verarbeitenden Bild vorangehenden Bild und in dem zu verarbeitenden Bild ($J_{t-1}$, $J_t$) von einem Mechanismus aleatorischer und rekursiver Art ausgewählt wurden.

4. Verfahren nach Anspruch 3, in dem der pseudo-temporale Zweig (10) die Kombination seiner Eingänge (1, 2, 3, 7) mit einem DURCHSCHNITTS-Operator (131) vornimmt, der pseudo-spatiale Zweig (20) die Kombination seiner Eingänge (1, 4, 5, 6) mit einem MEDIAN-Filter (132) vornimmt, und die Kombination der Ausgänge (8, 9) der beiden Zweige mit einem MEDIAN-Filter (140) durchgeführt wird, der an seinem Ausgang (40) die dem laufenden Pixel P(x,y) zuzuteilende gefilterte Intensität ($STRMI_t$) liefert.

5. Verfahren nach einem der Ansprüche 3 oder 4, in dem:

im Falle die Objekte in den Bildern dunkel auf hellem Hintergrund dargestellt sind, im pseudo-spatialen Zweig (20), der Mechanismus (111, 112, 113) aleatorischer und rekursiver Art zur Durchführung der temporalen Auswahl der Minderheitsintensitäten(6) beinhaltet:

eine Bestimmung der Umgebung ($V_t$) um das laufende Pixel im zu verarbeitenden Bild ($J_t$) unter Ausschluss des laufenden Pixels [P(x,y] und unter Berücksichtigung dessen, dass eine Umgebung im vorhergehenden Bild ($J_{t-1}$) bei der Verarbeitung des besagten vorhergehenden Bildes bereits bestimmt wurde,
eine Bestimmung (111, 112) eines aleatorischen Pixels in der Umgebung des temporalen zu verarbeitenden Bildes unter Berücksichtigung dessen, dass ein aleatorisches Pixel im vorhergehenden Bild ($J_{t-1}$) bei der Verarbeitung des besagten vorhergehenden Bildes bereits bestimmt wurde, und eine Bestimmung der Intensitäten ($R_{t-1}$, $R_t$) die denen der aleatorischen Pixel entsprechen, die im vorhergehenden Bild und im zu verarbeitenden Bild entnommen wurden,
eine Auswahl (113) unter diesen beiden Intensitäten der schwächsten Intensität [MIN ($R_{t-1}$, $R_t$)] der beiden aleatorischen Pixel, oder, im Falle die beiden Objekte hell auf dunklem Hintergrund dargestellt sind, beinhaltet der Mechanismus den Ablauf derselben Operationen, indem er anstatt der schwächsten Intensitäten die stärksten auswählt.

6. Verfahren nach Anspruch 5, in dem im Falle die Objekte in den Bildern dunkel auf hellem Hintergrund dargestellt sind, im pseudo-temporalen Zweig (10), die spatiale Auswahl der ZUVERLÄSSIGEN Minderheitsintensitäten (5, 7) im zu verarbeitenden Bild ($J_t$) beinhaltet:

eine Definition der linearen Filterträger, nach diskret angeordneten Achsen aufgeteilt und auf das laufende Pixel zentriert,
eine Bestimmung (121, 122) in zwei genau entgegengesetzten Filterträgern von zwei Pixeln mit der Bezeichnung ZUVERLÄSSIGE Pixel, jeweils ein Pixel pro Träger, mit den geringsten Intensitäten ($M_\alpha$, $M_{\alpha+\pi}$),
eine Bestimmung (123) zwischen diesen beiden Intensitäten ($M_\alpha$, $M_{\alpha+\pi}$) der Intensität, die die schwächste [MIN($M_\alpha$, $M_{\alpha+\pi}$)] ist,
und die Auswahl dieser letzteren Intensität als spatialen Eingang (7) des pseudo-temporalen Zweigs
oder, im Falle die Objekte hell auf dunklem Hintergrund dargestellt sind, einen Ablauf derselben Operationen, indem sie anstatt der schwächsten Intensitäten die stärksten auswählt.

7. Verfahren nach Anspruch 6, in dem die zufälligen Pixel mit größerem räumlichem Abstand zum laufenden Pixel als die zuverlässigen Pixel gewählt werden.

8. Verfahren nach Anspruch 7, in dem die linearen Filterträger aus zwei Pixeln bestehen, getrennt vom laufenden Pixel durch eine Krone von 1 Pixel, und die Achsen diskret aufgeteilt sind, und unter sich Winkel von $\pi/4$ bilden, und die Umgebungen ($V_t$) $\pm$ 6 Pixel bis $\pm$ 8 Pixel betragen.

9. Verfahren nach einem der vorangehenden Ansprüche mit einer pixelweisen standardmäßigen Automatikabtastung der Bilder, und in dem für jedes Pixel automatisch alle Verfahrensschritte umgesetzt werden.

10. Medizinisches Bildgebungsgerät mit einem System zur Erfassung einer numerischen Bildsequenz und einem System zur Bildverarbeitung, das Zugang zu den Bilddaten des Erfassungssystems hat, und ein Bildanzeigesystem, das einen Prozessor aufweist, um ein Verfahren entsprechend den Ansprüchen 1 bis 9 umzusetzen.

**Claims**

1. An image processing method for reducing the noise in an image, including determination of three temporal intensities relating to a current pixel in the same location in three successive images in a sequence, the image to be processed being the central image of the sequence, which method includes spatio-temporal filtering steps involving:

spatio-temporal processing means (10, 20) which combine inputs (1, 2, 3) of intensities of a temporal nature, inputs (4, 5, 7) of intensities of a spatial nature, and at least one input (6) of an intensity of a spatio-temporal and random nature, in order to provide the filtered intensity (40) for the current pixel of the processed image $(J_t)$.

2. A processing method as claimed in Claim 1, including:

a first processing branch (10) which is called a pseudo-temporal branch and combines a majority of inputs (1, 2, 3) of intensities of a temporal nature with a minority of inputs (7) of intensities of a spatial nature, a second processing branch (20) which is called a pseudo-spatial branch, is connected parallel to the first branch and combines a majority of inputs (1, 4, 5) of intensities of a spatial nature with a minority of inputs (6) of intensities of a spatio-temporal and random nature, and means (140) for combining results (8, 9) of the two parallel branches, producing the filtered intensity (40) for the current pixel of the processed image $(J_t)$.

3. A method as claimed in Claim 2, in which:

the majority of inputs (1, 2, 3) in the pseudo-temporal branch (10) are intensities ($I_{t-1}$, It, $I_{t+1}$) selected on the temporal axis (t-1, t, t+1) of the sequence, considered at the current pixel, and the minority of inputs (7) are intensities [MIN ($M_{á}$, $M_{á+ö}$)] which are substantially near to that of the current pixel, are called reliable, and spatially selected in the image $(J_t)$ to be processed, and the majority of inputs (1, 4, 5) in the pseudo-spatial branch (20) are intensities ($I_t$, $M_{á}$, $M_{á+ö}$) which are substantially near to that of the current pixel, are called reliable and spatially selected in the image $(J_t)$ to be processed, and the minority of inputs (6) are intensities of pixels selected in the image preceding the image to be processed and in the image to be processed ($J_{t-1}$, $J_t$) by way of a mechanism of a random and recursive nature.

4. A method as claimed in Claim 3, in which the pseudo-temporal branch (10) forms the combination of its inputs (1, 2, 3, 7) by means of a mean operator (131), the pseudo-spatial branch (20) forms the combination of its inputs (1, 4, 5, 6) by means of a median filter (132), and the outputs (8, 9) of the two branches are combined by means of a median filter (140) whose output (40) supplies the filtered intensity ($STRMI_t$) to be attributed to the current pixel P (x,y).

5. A method as claimed in one of the claims 3 or 4, in which in case the objects are represented as dark objects on a bright background in the images, the mechanism (111, 112, 113) of a random and recursive nature in the pseudo-spatial branch (20) for performing the temporal selection of minority intensities (6) comprises:

determination of a neighborhood ($V_t$) around the current pixel in the image ($J_t$) to be processed, excluding the current pixel [P(x,y)], while taking into account the fact that a neighborhood has already been determined in the preceding image ($J_{t-1}$) during the processing of said preceding image, determination (111, 112) of a random pixel in the neighborhood of the temporal image to be processed, taking into account the fact that a random pixel has already been determined in the preceding image ($J_{t-1}$) during the processing of said preceding image, determination of the intensities ($R_{t-1}$, $R_t$) which correspond to the two random pixels fetched from the preceding image and in the image to be processed, selection (113), from among these two intensities, of the lowest intensity [MIN($R_{t-1}$, $R_t$)] of the two random pixels, or, in case the objects are represented as bright objects on a dark background, the mechanism comprises the execution of the same operations while selecting the highest intensities instead of the lowest intensities.

6. A method as claimed in claim 5 in which, in case the objects are represented as dark objects on a bright background in the images, the spatial selection of reliable minority intensities (5, 7) in the image ($I_t$) to be processed in the pseudo-temporal branch (10) includes:

   definition of linear filter supports which are arranged along axes which are distributed in a discretized manner and are centered on the current pixel,
   determination (121, 122), in two diametrically opposed filter supports, of two pixels which are called reliable pixels, i.e. one pixel per support, and have the lowest intensities ($M_{á}$, $M_{á-ö}$),
   determination (123), from among these two intensities ($M_{á}$, $M_{á-ö}$), of the intensity which is the lowest [$MIN(M_{á}, M_{á+ö})$], and
   selection of the latter intensity as the spatial input (7) for the pseudo-temporal branch,
   or, in case the objects are represented as bright objects on a dark background, execution of the same operations while selecting the highest intensities instead of the lowest intensities.

7. A method as claimed in Claim 6, in which the random pixels are selected at a greater spatial distance from the current pixel than the reliable pixels.

8. A method as claimed in Claim 7, in which the linear filter supports consist of two pixels which are separated from the current pixel by a ring of 1 pixel, the axes being distributed in a discretized manner by forming angles of o/4 therebetween, the neighborhoods ($V_t$) being from ±6 pixels to ±8 pixels.

9. A method as claimed in one of the preceding claims, in which the images are scanned in an automatic and standard fashion, one pixel after the other, and in which the steps are executed automatically for each pixel.

10. A medical imaging apparatus, including a system for the acquisition of a sequence of digital images and a system for the processing of images which has access to the image data of the acquisition system and to a display system and includes a processor for carrying out a method as claimed in one of the claims 1 to 9.

FIG.1A

FIG.1B

FIG.2

FIG.3A

FIG.3B

FIG.4A

FIG.4B

FIG.5

FIG.6